# EUROPEAN PATENT APPLICATION

(11) **EP 0 615 101 A1**
(43) Date of publication of application: **14.09.1994**
(21) Application number: 93500029.9
(22) Date of filing: 09.03.1993
(51) Int. Cl.: F24F 5/00, F28C 1/14

(54) **Cooling tower**

(71) Applicant: Montejo Sedano, Victor Manuel, E-48920 Portugalete (Vizcaya) (ES); Far Mayol, Juan, E-48990 Algorta (Vizcaya) (ES)
(72) Inventor: Montejo Sedano, Victor Manuel, E-48920 Portugalete (Vizcaya) (ES); Far Mayol, Juan, E-48990 Algorta (Vizcaya) (ES)
(74) Representative: Gomez-Acebo y Pombo, José Miguel

(57) **Abstract**

Cooling tower consisting of a casing (1) with a sealed bottom and a heat exchange area (2) through which water circulates in the downward direction and air in the upward direction. The water collected at the lower part (4) of the cooling tower is transported with a pump to heat sources, from which the heated water is passed through a water-air heat exchanger (7) located at the air inlet of the cooling tower before it is returned to the cooling tower at the upper part of its heat exchange area (2).

## Description

The subject of this invention is a new cooling tower, of the type of tower constructed from a casing or housing sealed at least at one of its ends and whose interior is provded with certain cooling elements past which falls water driven by an external pump.

The main problems presented by cooling towers of the type stated above lie in the consumption of water and in low efficiency, due to the humidity difference existing in the air in the different places.

The first of the problems has already been considered by Spanish patent N^{º} 9001466. With the aim of remedying the problem and avoiding the provision of the auxiliary water device that these cooling towers require, that patent proposes that a circuit be provided in which the water accumulated at the bottom of the tower is driven by a pump towards the elements to be cooled. The hot water is then made to pass to a radiator provided in the upper part of the tower and which is cooled by the same fan that cools the water during its descent which takes place when the outlet from the radiator is connected to a sprinkler element, the water falling to the bottom via at least one perforated tray.

The objective of the invention is to achieve the dual aim of, on the one hand, reducing water consumption as far as possible and, on the other, increasing the efficiency of the cooling tower. The invention achieves its objectives by means of the prior drying of the air that is made to circulate inside the tower, which leads to a greater heat exchange capacity between the two fluids.

Drying of the air introduced into the cooling tower is achieved by providing the air intake in the tower, preferably outside the tower, with a heating element through which the air is made to circulate so that it can dry, the air then being introduced into the tower for circulating in countercurrent with the water to be cooled.

Clearly, the heating element can be of any kind, for example it could be a heat pump, a dryer, one or several resistances, etc. Nevertheless, with the aim of ensuring that the provision of this heating element does not imply additional energy consumption, it can consist of one or more radiators fed by the hot return water coming from the cooling apparatus fed by the cooling tower.

In this way, drying of the air is achieved at the same time as reducing the temperature of the water returning to the cooling tower.

The heating element mentioned above can have a fan associated with it in order to drive the air to be dried, which then be introduced into the cooling tower. The heating element will be located at the air intake, preferably on the outside of the tower casing, at a height intermediate between the level of the water in the tower and the filling panels for the tower. In the case of the heating element being constructed on the basis of radiators, each tower can have one or more of these. Equally, the air can be moved by an extractor located at the outlet instead of by a fan provided at the intake.

The tower's filling can consist of a special filling, as described in the said Spanish patent, or of a traditional filling, for example on the basis of corrugated plates.

Introduced into the cooling tower are certain control elements, consisting of a float, which regulates the level of the water tank in the tower in the manner of a shut-off valve, and an overflow which acts as an escape for the water in the event of the float becoming damaged or failing.

The characteristics that are the subject of the present invention are now described in greater detail, making reference to the attached diagram in which a cooling tower is schematically represented, including the improvements that are the subject of the invention.

Shown in the attached diagram with reference N^{º} 1 is the casing of a cooling tower, inside which is housed, for example, a filling consisting of corrugated plates 2 arranged in a vertical or inclined position. Circulating around this filling in countercurrent are water and air, the water in the downward direction, being fed in the upper part of the tower by means of suitable distributors, and the air in the upward direction. The filling 2 is supported on an intermediate partition 3, beneath which is found the tank 4 that collects the cooled water, which is extracted and driven by means of a pump towards the cooling apparatus (not shown).

The lower tank 4 is fitted with a float 5, with its corresponding valve for controlling the water feed when the level of the water drops below a particular limit due to evaporation effects. The tank 4 also has an overflow 6 for water to exit through in the event of the float failing and not cutting off the water feed.

In accordance with the invention, added on to the outside of the tower is a heating element, preferably consisting of one or more radiators 7, around whose piping the hot return water coming from the cooling apparatus is made to circulate.

The cold water contained in the lower tank 4 of the cooling tower is driven by means of a pump (not shown) to the cooling apparatus where, due to heat exchange, the water is heated in order to return again to the cooling tower. This hot return water is the water that is made to circulate around the pipes of the radiator or radiators 7. Air is driven past the outside of these radiators by means of a fan 8. The effect achieved is that the air supplied by the fan 8 is dried and is introduced in these conditions in countercurrent inside the tower 1.

With the arrangement described above, two advantages are obtained: on the one hand, cooling of the return water from the cooling apparatus is achieved before it is introduced into the upper part of the tower 1. On the other hand, the air that is introduced into the tower 1, and will circulate in countercurrent with the water through the filling 2, is dried and so its heat exchange capacity with the water is increased.

Indeed, with the improvements that are the subject of the invention a reduction in the temperature of the water supplied to the tower is achieved and, with it, a reduction in its evaporation, and at the same time the air that will circulate in countercurrent with the water is dried, thereby increasing the heat exchange between the two fluids.

The radiator or radiators 7 can back on to the outside of the casing of the tower 1, at a height intermediate between the level of the water in the tank 4 and the filling panels 2.

The nature of the invention, and also the manner of carrying it out in practice, having been sufficiently described, it must be noted that the arrangements stated above are liable to modifications of detail inasmuch as they do not alter its fundamental principle.

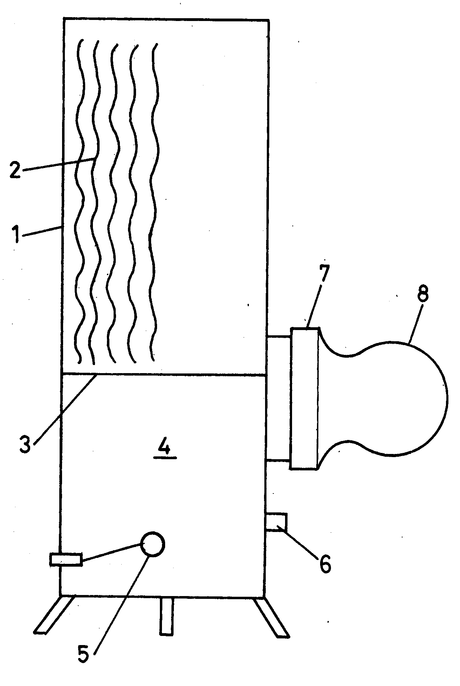

## Claims

1. Cooling tower of the type consisting of a casing (1) with a sealed bottom, inside which is a heat exchange area (2) through which circulates water in the downward direction and air in the upward direction, the lower part (4) being connected through a pump to the elements to be cooled, from which the hot water returns to the upper part of the tower for cooling, characterized by the fact that provided in the air intake to the tower is a heating element (7) responsible for drying the air before it is introduced into the tower for circulation in countercurrent with the water to be cooled.

2. Cooling tower according to patent claim 1, characterized by the fact that the heating element (7) preferably consists of a radiator, around which the hot return water from the cooling apparatus can be made to circulate.

3. Cooling tower according to patent claim 2, characterized by the fact that the radiator (7) is associated with a fan (8) for driving the air to be dried.
